(19) Europäisches Patentamt
European Patent Office
Office européen des brevets

(11) Veröffentlichungsnummer: **0 511 985 B1**

(12) **EUROPÄISCHE PATENTSCHRIFT**

(45) Veröffentlichungstag der Patentschrift: **26.10.94**

(51) Int. Cl.5: **B60T 8/66**

(21) Anmeldenummer: **91902172.5**

(22) Anmeldetag: **19.01.91**

(86) Internationale Anmeldenummer:
**PCT/EP91/00097**

(87) Internationale Veröffentlichungsnummer:
**WO 91/11354 (08.08.91 91/18)**

(54) **ANTIBLOCKIERREGELSYSTEM.**

(30) Priorität: **25.01.90 DE 4002091**

(43) Veröffentlichungstag der Anmeldung:
**11.11.92 Patentblatt 92/46**

(45) Bekanntmachung des Hinweises auf die
Patenterteilung:
**26.10.94 Patentblatt 94/43**

(84) Benannte Vertragsstaaten:
**CH DE FR GB IT LI SE**

(56) Entgegenhaltungen:
**EP-A- 0 336 442**
**EP-A- 0 338 538**

(73) Patentinhaber: **ROBERT BOSCH GMBH**
**Postfach 30 02 20**
**D-70442 Stuttgart (DE)**

(72) Erfinder: **SCHÄFER, Jochen**
**Eibenweg 5**
**D-7120 Bietigheim (DE)**

**Beschreibung**

Stand der Technik

Es ist bekannt, das Auslösen der ABS-Regelung zu erschweren, um nicht durch Störsignale die Regelung unnötig in Betrieb zu setzen (DE-AS 20 63 944 Spalte 9 Absatz b).

Vorteile der Erfindung

Die Lösung gemäß den Merkmalen des Anspruchs 1 vermeidet nach wie vor, daß durch eine Störung auf dem Signal eines Sensors z.B. durch einen Schlag auf das Rad die Regelung ausgelöst wird. Andererseits bleibt das Regelsystem hinsichtlich des Auftretens einer Instabilität an mehreren Rädern - vorzugsweise den beiden Rädern der Vorderachse - empfindlich. Das Auftreten eines Instabilitätssignals an beiden Rädern ist ein Indiz dafür, daß tatsächlich eine Blockierneigung aufgetreten ist. Ob danach ein Schlupfsignal alleine und/oder zusätzlich ein Verzögerungssignal oder ein anderes Instabilitätskriterium, in das dann nur noch das Schlupfsignal eines Rads eingeht, die Regelung bestimmt, ist für die Erfindung unwesentlich.

Man kann einfach den Mittelwert oder die Summe aus den Schlupfwerten bilden und diesen Schlupfwerten aber auch noch Bewertungsfaktoren zuordnen, die z.B. den größeren Schlupfwert $\lambda_1$ mit einem größeren Bewertungsfaktor $K_1$ beaufschlagen. Für diese beiden Fälle und Mittelwertbildung angenommen, lauten die Kriterien für den Regelbeginn, vorausgesetzt das Überschreiten einer Schlupfschwelle bestimmt den Druckabbau:

$$\text{Regelbeginn bei:} \quad J_1 < \frac{\lambda_r + \lambda_1}{2}$$

$$\text{bzw.:} \quad J_2 < \frac{K_1\lambda_1 + K_2\lambda_2}{2}$$

Hierbei sind $J_1$ und $J_2$ Grenzwerte, $\lambda_r$ und $\lambda_1$ sowie $\lambda_1$ und $\lambda_2$ sind Schlupfwerte. Sinnvollerweise ist $K_1 + K_2 = 2$. Im Falle der Summenbildung ist J natürlich größer z.B. doppelt so groß. Nach ausgelöster Regelung wird dann wieder $\lambda_r$ bzw. $\lambda_1$ mit der Schlupfschwelle verglichen.

Die Erfindung kann auch bei anderen Instabilitätskriterien Anwendung finden, z.B. bei einem entsprechend der DE-OS 3614770, bei der Radverzögerungswerte und Schlupfwerte integriert und dann addiert werden, und dann die Summe mit einem Schwellwert zur Regelung verglichen wird. Die Erfindung ist auch bei einem Instabilitätskriterium entsprechend der älteren Patentanmeldung P 3841977.7 anwendbar, bei der das Instabilitätskriterium K durch folgende Beziehung gegeben ist

$$K = aB + bL + cIL + d \cdot a_{FZ}$$

wobei a, b, c und d Konstante sind, B die Radverzögerung, L der Radschlupf IL das Integral des Radschlupfs und $a_{F2}$ die Fahrzeugverzögerung ist. Erreicht K eine Schwelle so setzt Druckabbau ein. Für den Regelungsbeginn ist L (auch in IL) nicht der Schlupf eines Rades sondern der Mittelwert oder bei entsprechenden anderen Konstanten b und c die Summe der Schlupfwerte einer Achse; d.h. bei einseitiger Instabilität hat K einen höheren Wert als bei beidseitiger:

$$\text{linkes Rad} \qquad\qquad \text{rechtes Rad}$$

$$\text{z.B.} \quad K = \frac{aB + bL + cIL + d \cdot a_{FZ} \;+\; aB + bL + cIL + d \cdot a_{FZ}}{X},$$

wobei X vorteilhafterweise gleich 2 ist.

Zeichnung

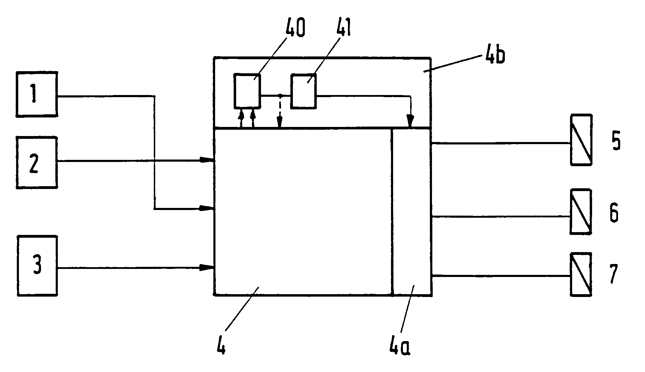

Anhand der Zeichnung wird ein Ausführungsbeispiel der Erfindung erläutert. Es sind dort den beiden Vorderrädern zugeordnete Radsensoren mit 1 und 2, ein den Hinterrädern zugeordneter Radsensor mit 3 bezeichnet. Die Signale dieser Sensoren werden einer Auswerteschaltung 4 zugeführt, die aus den Sensorsignalen Bremsdrucksteuersignale erzeugt, die Bremsdrucksteuerventilen 5 und 6 für die Bremsen der Vorderräder und 7 für die Bremsen der Hinterräder zugeführt werden. In einem Teilblock 4a der Auswerteschaltung sind die Endstufen der drei Regelkanäle untergebracht.

Die Auswerteschaltung 4 enthält noch einen Teilblock 4b, in dem ein Mittelwertbildner 40 untergebracht ist. Diesem werden aus dem Hauptteil der Auswerteschaltung 4 die dort für die eigentliche Regelung sowieso gebildeten und benötigten Schlupfwerte der Vorderräder zugeführt. Der - gegebenenfalls unter Berücksichtigung von Bewertungsfaktoren - ermittelte Schlupfmittelwert wird einer Schwellenwertstufe 41 zugeführt, die ein Signal abgibt, wenn ein vorgegebener Schlupfschwellwert überschritten ist. Die Schwellwertstufe 41 gibt im Falle, daß nur ein Schlupfwert an einem Rad auftritt, erst beim doppelten Wert ein Signal (ist also hier unempfindlich), jedoch wird bei Schlupf an beiden Rädern schon bald der Schlupfschwellwert erreicht und ein Signal erzeugt. Dieses Signal schaltet bei vorher gesperrten Endstufen diese bleibend (d.h. bis zum Regelungsende) ein, d.h. erst jetzt können die in den Regelkanälen vorhandenen Regelsignale den Bremsdruck beeinflussen. Das Ausgangssignal der Schwellwertstufe 41 kann jedoch die Regelkanäle auch in anderer Weise beeinflussen.

Im Falle eines anderen Instabilitätskriteriums z.B. dem oben beschriebenen K geht in die Bildung des Instabilitätskriteriums für die einzelnen Räder im Block 4 zuerst der in 40 gebildete Mittelwert für L ein (gestrichelte Leitung). Ist die Regelung dann ausgelöst, dann geht der Schlupfwert jedes einzelnen Rads in die zugehörige Instabilitätskriteriumbildung ein.

Man kann jedoch auch für einen größeren Anteil des Instabilitätskriteriums den Mittelwert oder die Summe bilden und diesen Mittelwert für den Regelbeginn in die Instabilitätskriteriumbildung eingeben lassen.

Schließlich kann man den Mittelwert (Summe) der Instabilitätskriterien der Räder einer Achse bilden, und diesen zur Regelungsauslösung benutzen.

Es wurde im Ausführungsbeispiel ein Blockschaltbild für die Realisierung der Erfindung gewählt. Die Erfindung kann jedoch auch mittels eines Rechners und der entsprechenden Software realisiert werden.

**Patentansprüche**

1. Antiblockierregelsystem für ein Kraftfahrzeug, enthaltend Meßwertgeber zur Ermittlung von Radgeschwindigkeiten, eine Auswerteschaltung, die unter Ausnutzung dieser Meßwertgebersignale Bremsdrucksteuersignale erzeugt und Bremsdrucksteuereinrichtungen zur Variation des Bremsdrucks an den Fahrzeugrädern, wobei in der Auswerteschaltung Radschlupfsignale erzeugt werden, die in ein vorgegebenes, die Regelung des Bremsdrucks bewirkendes Instabilitätskriterium eingehen, wobei das Auslösen der Regelung bei Regelbeginn erschwert ist, dadurch gekennzeichnet, daß der Mittelwert oder die Summe wenigstens der Schlupfwerte der Räder einer Achse gebildet wird und daß zum Auslösen der Regelung dieser Mittelwert oder diese Summe in das Instabilitätskriterium eingeht.

2. Antiblockierregelsystem nach Anspruch 1, dadurch gekennzeichnet, daß die Schlupfwerte vor der Mittelwert- oder Summenbildung mit unterschiedlichen Bewertungsfaktoren beaufschlagt werden.

3. Antiblockierregelsystem nach Anspruch 1 oder 2, dadurch gekennzeichnet, daß die Schlupfwerte der Räder der Vorderachse in die Mittelwert- oder Summenbildung einbezogen werden.

4. Antiblockierregelsystem für ein Kraftfahrzeug, enthaltend Meßwertgeber zur Ermittlung von Radgeschwindigkeiten, eine Auswerteschaltung, die unter Ausnutzung dieser Meßwertgebersignale Bremsdrucksteuersignale erzeugt und Bremsdrucksteuereinrichtungen zur Variation des Bremsdrucks an den Fahrzeugrädern, wobei in der Auswerteschaltung Radschlupfsignale erzeugt werden, die in ein vorgegebenes, die Regelung des Bremsdrucks bewirkendes Instabilitätskriterium eingehen, wobei das Auslösen der Regelung bei Regelbeginn erschwert ist, dadurch gekennzeichnet, daß der Mittelwert oder die Summe wenigstens von Teilen der einen Druckabbau an den einzelnen Rädern auslösenden Instabilitätskriterien wenigstens der Räder einer Achse gebildet wird und daß zum Auslösen der Regelung dieser Mittelwert oder diese Summe in die Instabilitätskriteriumbildung der einzelnen Räder einbezogen wird bzw. als Instabilitätskriterium verwendet wird.

## EP 0 511 985 B1

## Claims

1.  Anti-lock control system for a motor vehicle, containing sensors for determining wheel speeds, an evaluation circuit which, using these sensor signals, produces brake pressure control signals, and brake pressure control devices for varying the brake pressure at the vehicle wheels, wheel slip signals being produced in the evaluation circuit and entering into a predetermined instability criterion which brings about control of the brake pressure, the triggering of control at the beginning of control being made more difficult, characterised in that the average value or the sum of at least the slip values of the wheels of one axle is formed and that for triggering control, this average value or this sum enters into the instability criterion.

2.  Anti-lock control system according to Claim 1, characterised in that, before the formation of the average value or the sum, the slip values are given different weighting factors.

3.  Anti-lock control system according to Claim 1 or 2, characterised in that the slip values of the wheels of the front axle are included in the formation of the average value or sum.

4.  Anti-lock control system for a motor vehicle, containing sensors for determining wheel speeds, an evaluation circuit which, using these sensor signals, produces brake pressure control signals, and brake pressure control devices for varying the brake pressure at the vehicle wheels wheel slip signals being produced in the evaluation circuit and entering into a predetermined instability criterion which brings about control of the brake pressure, triggering of control at the beginning of control being made more difficult, characterised in that the average value or the sum of at least parts of the instability criteria, of at least the wheels of one axle, triggering a pressure reduction at the individual wheels is formed and that, for triggering control, this average value or this sum is included in the instability criterion formation for the individual wheels or used as an instability criterion.

## Revendications

1.  Système de régulation anti-blocage pour un véhicule automobile, comprenant un capteur de mesure pour déterminer les vitesses des roues, un circuit d'exploitation utilisant ces signaux des capteurs de mesure pour créer des signaux de commande de la pression de frein et des installations de commande de la pression de frein pour modifier la pression de frein au niveau des roues du véhicule, tandis que dans le circuit d'exploitation des signaux de glissement de roue sont produits, signaux qui sont intégrés à un critère d'instabilité prédéterminé assurant la régulation de la pression de frein, ou le déclenchement de la régulation est rendu plus difficile au début de la régulation, système caractérisé en ce qu'il forme la valeur moyenne ou la somme au moins des valeurs de glissement des roues d'un essieu et pour déclencher la régulation il intègre cette valeur moyenne ou la somme dans le critère d'instabilité.

2.  Système de régulation anti-blocage selon la revendication 1, caractérisé en ce qu'il applique aux valeurs de glissement des coefficients de pondération différents avant de former la valeur moyenne ou la somme.

3.  Système de régulation anti-blocage selon la revendication 1 ou 2, caractérisé en ce qu'il intègre les valeurs de glissement des roues de l'essieu avant dans la formation de la valeur moyenne ou de la somme.

4.  Système de régulation anti-blocage d'un véhicule automobile comprenant un capteur de valeur de mesure pour déterminer les vitesses des roues, un circuit d'exploitation utilisant ces signaux de capteur de valeur de mesure pour créer des signaux de commande de pression de frein et des installations de commande de pression de frein pour modifier la pression de frein au niveau des roues du véhicule, le circuit d'exploitation créant des signaux de glissement de roue qui sont intégrés dans un critère d'instabilité, prédéterminé, assurant la régulation de la pression de frein, le déclenchement de la régulation étant rendu plus difficile au début de la régulation, caractérisé en ce qu'il forme la valeur moyenne ou la somme d'au moins certaines parties des critères d'instabilité déclenchant une diminution de pression au niveau des différentes roues, pour au moins les roues d'un essieu et pour déclencher la régulation il utilise ou il intègre comme critère d'instabilité cette valeur moyenne ou la somme pour former le critère d'instabilité des différentes roues.